Europäisches Patentamt

European Patent Office

Office européen des brevets

(11) Publication number: 0 434 366 A2

# EUROPEAN PATENT APPLICATION

(21) Application number: 90313849.3

(22) Date of filing: 18.12.90

(51) Int. Cl.5: G02F 1/133, C09K 19/60

(30) Priority: 22.12.89 JP 333353/89

(43) Date of publication of application:
26.06.91 Bulletin 91/26

(84) Designated Contracting States:
DE FR GB NL

(71) Applicant: MATSUSHITA ELECTRIC
INDUSTRIAL CO., LTD.
1006, Oaza Kadoma
Kadoma-shi, Osaka-fu, 571(JP)

(72) Inventor: Ogawa, Tetsu
3-35-10, Kibogaoka, Toyono-cho
Toyono-gun, Osaka-fu 563-02(JP)
Inventor: Hotta, Sadayoshi
1-10, 1-chome, Kohda
Hirakata-shi, Osaka-fu 573(JP)

(74) Representative: Crawford, Andrew Birkby et al
A.A. THORNTON & CO. Northumberland
House 303-306 High Holborn
London WC1V 7LE(GB)

(54) Polymer dispersed liquid crystal display.

(57) In a polymer dispersed liquid crystal display holding a mixture layer composed of liquid crystal composition and non-liquid crystal macromolecular compound, a dichromic pigment is contained in the liquid crystal composition or in the mixture layer

Fig. 1

1 ... Liquid crystal
2 ... Dichromic pigment
3 ... Polymer compound
4 ... Substrate

EP 0 434 366 A2

## POLYMER DISPERSED LIQUID CRYSTAL DISPLAY

BACKGROUND OF THE INVENTION

1. Field of the Invention

The present invention relates to a polymer dispersed liquid crystal display capable of displaying bright image without requiring polarizer.

2. Description of the Prior Art

The liquid crystal display (LCD hereinafter) is known for its excellent features including thin type, light weight, low voltage driving and low power consumption, and it is continuing remarkable progress in the display field both in technology and in market.

Recently, the polymer dispersed LCD (PD-LCD) making use of scattering of light in the principle of display is noticed as a new display mode, and it is researched and developed intensively.

This is because of the outstanding features of the PD-LCD, including:

1) Relatively easy manufacturing process;
2) Bright display enabled without basically requiring polarizer;
3) Low cost;
4) Relatively quick response speed so as to be applicable to video display;
5) Ease of widening the display area;
6) Operation at low voltage; and
7) Field effect type, superior in reliability to conventional current effect type DSM mode LCD.

Examples of research and development of such PD-LCD include the following:
A.M. Lackner, J.D. Margerum, L.J. Miller, F.G. Yamagishi, E. Ramos, K.C. Lim, W.H. Smith, Jr., C.I. van Ast; "Methods to Obtain Lower Voltage Activated Polymer Dispersed Liquid Crystal Displays," Proc. Japan Display '89, pp.400-403 (1989); and
T. Fujisawa, H. Ogawa, K. Maruyama; "Electro-Optic Properties and Multiplexibility for Polymer Network Liquid Crystal Display (PN-LCD)," Proc. Japan Display '89, pp.690-693 (1989).

In the PD-LCD, when voltage is not applied, in the boundary of the liquid crystal composition region and the non-liquid crystal polymer compound region and inside the liquid crystal composition, the incident light is scattered to show a dark state. When voltage is applied, the liquid crystal molecules are arranged in the electric field direction, and the refractive index of the polymer compound and the ordinary light refractive index of the liquid crystal molecule become nearly equal to each other, and the incident light goes straightforward without scattering, thereby showing a bright state.

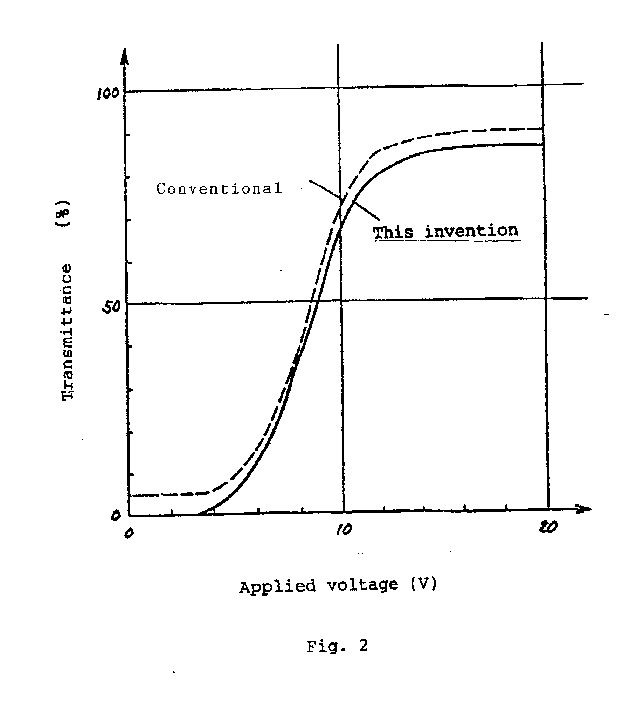

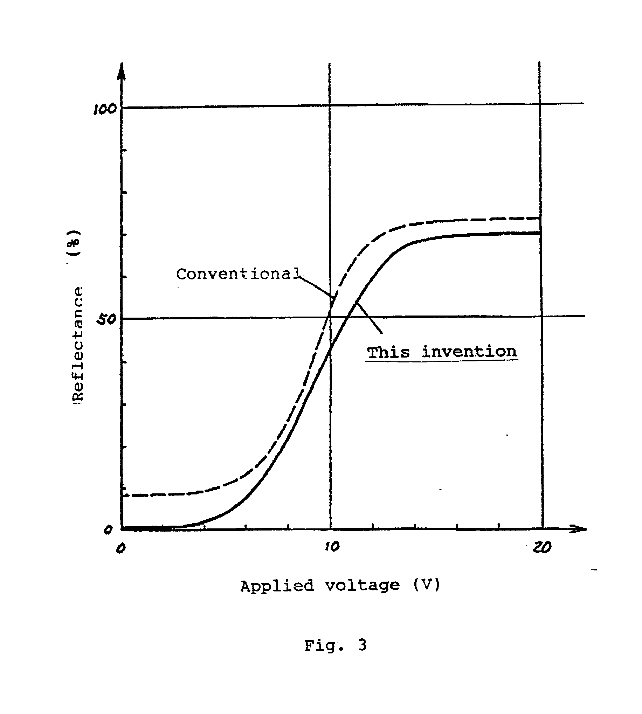

Therefore, its display mode is normally black (negative display) mode as shown in Fig. 2 or Fig. 3.

Generally, in the normally white (positive display) mode, the transmissivity or light reflectivity in dark state can be controlled by the applied voltage. By contrast, in the normally black mode as in the PD-LCD, the light transmissivity or light reflectivity in dark state is optically determined, basically regardless of the applied voltage, and hence its control is an extremely important factor for maintaining the display quality.

In the conventional PD-LCD, however, due to reflection on various thin film interfaces, or shortage of light scattering performance of liquid crystal layer, there was, for example in the case of transmission type PD-LCD, a light transmissivity of as much as 5% in dark state as shown in Fig. 2. Accordingly, a sufficient contrast was not obtained, and the color reproducing range could not be maintained sufficiently.

It is, meanwhile, a concept of natural consequence to intend to develop application as reflection type display by making use of the features of the PD-LCD capable of displaying bright image without requiring polarizer.

In this case, too, in the conventional PD-LCD, as shown in Fig. 3, effects of the reflection electrode and reflection member are added, and a sufficiently low light reflectivity in dark state could not be obtained.

SUMMARY OF THE INVENTION

The present invention is devised in the light of such background, and is intended to present a polymer dispersed liquid crystal display sufficiently lowering the light transmissivity or light reflectivity when voltage is not applied, in a simple structure.

The polymer dispersed liquid crystal display of the invention features a structure in which a mixture layer comprising liquid crystal composition and non-liquid crystal polymer compound is held between a pair of substrates, and a dichromic pigment is contained in the liquid crystal composition or in the mixture layer.

In this constitution, by the light absorption of the dichromic pigment, the light transmissivity or light reflectivity in dark state when voltage is not applied is reduced. On the other hand, since the light transmissivity or light reflectivity in ON state is nearly equal to the value before the dichromic pigment is contained, and therefore enhancement of contrast and expansion of the color reproduction range of the polymer dispersed liquid crystal display can be realized.

BRIEF DESCRIPTION OF THE DRAWINGS

Fig. 1 is a basic structural sectional view of a polymer dispersed liquid crystal display of the invention.

Fig. 2 is a diagram showing a relation between transmissivity and applied voltage of a transmission type polymer dispersed liquid crystal display.

Fig. 3 is a diagram showing a relation between reflectivity and applied voltage of a reflection type polymer dispersed liquid crystal display.

DESCRIPTION OF THE PREFERRED EMBODIMENTS

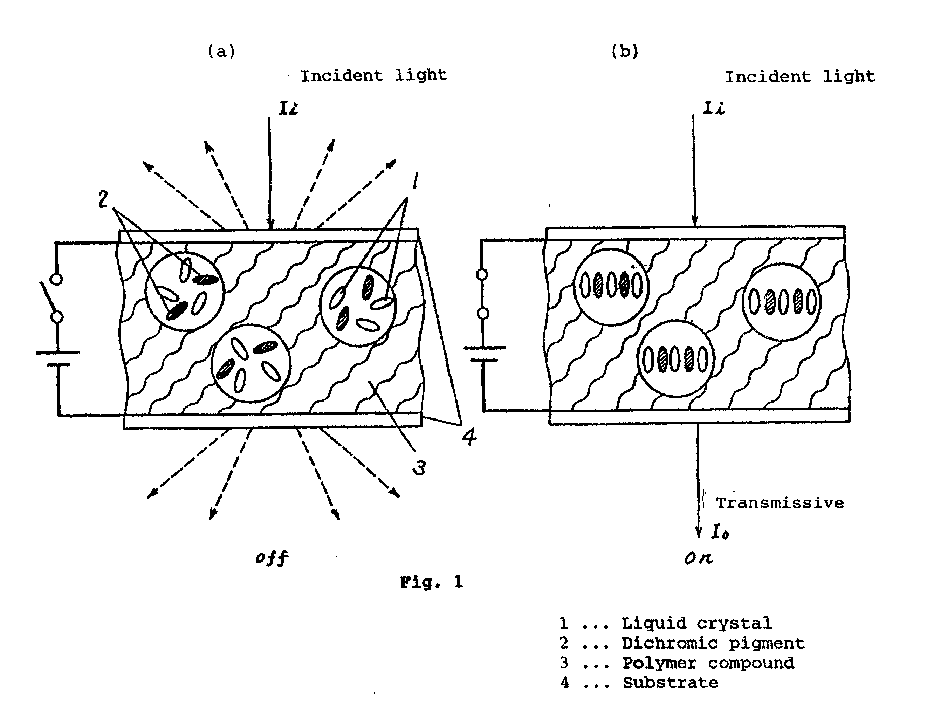

Fig. 1 is a basic structural sectional view of a polymer dispersed liquid crystal display of the invention. In Fig. 1, numeral 1 is a liquid crystal, of which orientation varies with the voltage. Numeral 2 is a dichromic pigment, of which light absorption rate generally varies between the major axis direction and minor axis direction. Numeral 3 is a polymer compound, in which the liquid crystal 1 is contained in dispersed state. Numeral 4 is a substrate, which is generally made of glass or the like.

First of all, a typical manufacturing method of the polymer dispersed liquid crystal display of the invention is described below.

An ordinary nematic liquid crystal is mixed with 1 to 5 wt.% of dichromic pigment. This liquid crystal-dichromic pigment mixture is mixed with a resin which is a polymer precursor at a rate of 5 to 30 wt.%, and this mixture is held between a pair of substrates and hardened.

At this time, as the dichromic pigment, anthraquinone, tetrazine, melocyanine, stylyl, azomethyne, or azo pigment may be used. As the resin, a transparent material in hardened state is used, such as acrylic resin and epoxy resin. The hardening method is light (UV light exposure) hardening, heat hardening, or their combination.

By this manufacturing method, the polymer dispersed liquid crystal display as shown in Fig. 1 is obtained.

The principle of its operation is explained below.

As shown in Fig. 1, in the PD-LCD, the liquid crystal is present in the polymer usually in a spherularly dispersed state, and the liquid crystal molecules and dichromic pigment are oriented at random therein. At this time, the dielectric anisotropy $\Delta\epsilon$ of the liquid crystal is positive, and the materials are selected so that the refractive index to the ordinary light may be nearly equal to that of polymer.

When voltage is not applied, in the conventional PD-LCD, as mentioned above, it is set in dark state only the light scattering in the liquid crystal and liquid crystal/polymer interface, but in the PD-LCD of the invention, the light absorption of dichromic pigment is added, and the light transmissivity in dark state can be further reduced.

On the other hand, when voltage is applied, the liquid crystal molecules are oriented in the direction of electric field, and the dichromic pigment is also oriented in the direction of electric field in cooperation with the movement of the liquid crystal molecules. The plane of polarization of incident light at this time is orthogonal to the light absorption axis of the dichromic pigment, and light absorption does not occur in principle, and the incident light goes straightforward.

In the conventional PD-LCD and the transmission type PD-LCD of the invention, the T-V (transmissivity-voltage) characteristics were actually measured, and the results are shown in Fig. 2.

As known from Fig. 2, the light transmissivity in OFF state was remarkably reduced. On the other hand, lowering of transmissivity in ON state was about 5%, and as a result a contrast ratio of 50 to 100% was obtained.

The above explanation relates to an application of the invention in the transmission type LCD, but similar results were obtained when applied in the reflection type. The results are shown in Fig. 3.

Same as in the transmission type, without extremely lowering the reflectivity in ON state, the reflectivity in OFF state was decreased, and a notable improvement of contrast ratio was achieved.

As the reflector, a reflective electrode may be disposed on the inner side of the substrate, or a reflective member may be bonded to the outside of the substrate.

As the substrate composing such PD-LCD, practically, a matrix substrate of nonlinear elements such as thin film transistors may be used.

That is, as known from Fig. 2 or Fig. 3, the required driving voltage is relatively high, 10 to 20 V, and in order to make the best of the PD-LCD characteristics, it seems more advantageous than the simple matrix driving.

The invention may be applied, needless to say, to monochromatic display and color display alike.

As mentioned herein, according to the invention, in a very simple constitution, the display quality may be enhanced by improving the contrast or expanding the color reproduction range of polymer dispersed liquid crystal display, which is practically very useful.

Claims

A polymer dispersed liquid crystal display having a mixture layer comprising liquid crystal composition and non-liquid crystal polymer compound held between a pair of substrates, wherein a dichromic pigment is contained in the liquid crystal composition or in the mixture layer.

EP 0 434 366 A2

(a)

(b)

Incident light

Incident light

$Ii$

$Ii$

2

1

4

3

off

On

Transmissive

$Io$

Fig. 1

1 ... Liquid crystal
2 ... Dichromic pigment
3 ... Polymer compound
4 ... Substrate

Fig. 2

Fig. 3